# EUROPEAN PATENT SPECIFICATION

(11) **EP 3 869 728 B1**
(45) Date of publication and mention of the grant of the patent: **27.09.2023**
(21) Application number: 20382128.5
(22) Date of filing: 24.02.2020
(51) Int. Cl.: H04L 9/00, H04L 9/06

(54) **DEVICE PROTECTED AGAINST SIDE-CHANNEL ATTACKS**
VORRICHTUNG MIT SCHUTZ GEGEN SEITENKANALANGRIFFE
DISPOSITIF PROTÉGÉ CONTRE DES ATTAQUES PAR CANAUX AUXILIAIRES

(43) Date of publication of application: 25.08.2021
(73) Proprietor: Ikerlan, S. Coop, 20500 Arrasate-Mondragon, Guipúzcoa (ES)
(72) Inventor: FLORES BARROSO, José Luis, E-20500 Arrasate-Mondragón, Guipúzcoa (ES); PÉREZ, Juan Martín, E-20500 Arrasate-Mondragón, Guipúzcoa (ES); ARMENDÁRIZ, Igor, E-20500 Arrasate-Mondragón, Guipúzcoa (ES)
(74) Representative: ABG Intellectual Property Law, S.L.

(56) References cited:
- US-A1- 2013 120 024
- LU ZHANG ET AL: "Power Side Channels in Security ICs: Hardware Countermeasures", ARXIV.ORG, CORNELL UNIVERSITY LIBRARY, 201 OLIN LIBRARY CORNELL UNIVERSITY ITHACA, NY 14853, 2 May 2016 (2016-05-02), XP080698975,

## Description

### Object of the Invention

The present invention relates to protecting a data processing device against certain side-channel attacks.

The data to be processed is processed by means of a predetermined sequence of steps. The present invention is characterized by the use of a plurality of stages made up in turn of a plurality of functional units capable of processing a subset of the sequence of steps, wherein the functional units process both correct data and incorrect data, preventing certain side-channel attacks.

In this computational structure, a path is established between the input and the output passing through all the stages whereby the correct data is processed according to all the steps forming the complete sequence of steps, and this is carried out by randomly selected functional units.

### Background of the Invention

Any of the electronic devices which carry out digital signals processing is based on internal electronic circuits which, in the operating mode, involve the movement of electrons. This movement of electrons is produced primarily due to two factors, which are the input signals and the processing circuit of these signals generating a series of physical effects.

Secondly, the consumption required by the device is affected by this variation, causing fluctuations in the intensity of the current requiring for processing the information, as in the preceding case these variations are readily measurable and in turn allow information of the device to be deduced.

And finally, the actual processing of the information generates variations in the temperature of the device depending on the processing to be performed given the physical nature of any electronic component.

Both the electric fields associated with the charges of these electrons and the magnetic fields generated in turn by the currents due to the movement of electrons for any of the reasons indicated above are fields which, though they may be weak or are attempted to be shielded with external protections, can be used by an attacker to try to interfere with the information processed and/or stored by the device.

This technique is referred to as side-channel attack and has proven to be very effective in espionage activities since having mere proximity to the device, even without having access to the protected data, is sufficient to enable obtaining information about both the manipulated data and the internal data, as well as about the manipulation that is being carried out with respect to said data.

Those systems in which cryptography techniques are involved are considerably sensitive since obtaining the cryptographic key allows all the encrypted information to be deciphered.

The protection of specific devices involved in industrial processes where cryptography is a critical element is of particular interest. Examples of areas of application would be the automotive sector, lifting systems, transport, etc.

It is also appropriate to mention a particularly relevant sector given the sensitivity of the transferred information, such as the telecommunications sector, where the use of side-channel attacks can be applied to mobile devices. This attack is particularly dangerous because it allows personal and professional information stored in the same device to be accessed. The same occurs with portable computers. These computers, like mobiles, are devices that are more readily exposed to the proximity of other people and therefore they are the devices most likely to be attacked.

To prevent attacks of this type against devices, shielding techniques which prevent signals output by the electronic components of the device from being accessible by third parties are known; nevertheless, it is not always possible to provide complete shielding of the device since, for example, in industrial settings these shields are accessible and even removable.

Document US20130120024 A1 describes a logic system that is resistant to differential power analysis and other side channel attacks (SCA). In particular, it is described a Wave Dynamic Differential Logic (WDDL), wherein a differential logic stage is pre-charged or pre-discharged by a previous logic stage, such as, for example, a previous SDDL stage or a WDDL stage.

Article *"Power Side Channels in Security ICs: Hardware Countermeasures"* describes a review of foundational power analysis attack techniques and examines a variety of hardware design mitigations to highlight exposed vulnerabilities in hardware-based countermeasures for more secure implementations.

The present invention solves the identified problems by proposing a specific configuration wherein, despite outputting signals as a result of their operation, these signals hinder obtaining the processed information and also protect the operations being carried out on such data.

### Description of the Invention

The present invention is a device protected against side-channel attacks as claimed in claim 1.

The device is adapted for carrying out a data processing method, wherein the method is made up of a sequence of steps (Pᵣ) with r=1,..,R, with R being a pre-established integer. The device is configured such that it allows the data to be processed, hindering an attacker from being able to deduce the processed data and the protected information required for processing the data (for example a cipher key) with respect to said set of data for processing same using a side-channel attack.

The device according to the invention comprises:
- *a plurality of functional units T_{i,j} with i=1,...,n; and j=1,...,m with n and m being pre-established integers, verifying that:*
   ∘ *each of the functional units T_{i,j} comprises at least*
      - *a data input operable to receive data,*
      - *a process unit configured for executing a subset of steps spᵢ on the data received in the data input;*
      - *a data output to provide the data processed by the process unit;*
   ∘ *the functional units T_{i,j} are sequentially distributed in stages Eᵢ, i=1,...,n, wherein*
      - *each stage Eᵢ comprises m of the plurality of functional units T_{i,j}, j=1,...,m;*
      - *the m functional units T_{i+1,j} of one of the stages from the second stage* to *the last stage, Eᵢ₊₁, have data inputs in communication with data outputs of the m functional units T_{i,j} of its preceding stage, Eᵢ, by means of a selector Sᵢ, i=1, ... ,n-1, which establishes a bijective connection between the m functional units T_{i,j} of the stage Eᵢ and the m functional units T_{i+,1,j'} of the stage Eᵢ₊₁, with j' equal to or different from j;*
      - *the data inputs of the m functional units T_{1,j} of the first stage E₁ are in communication with a data source F such that:*
         - *at least one of the m functional units T_{i,j} of the first stage E₁ receives correct data, and*
         - *the remaining functional units of the first stage E₁, other than* the *at least one functional unit T_{i,j} that receives correct data; receive false data, that is, incorrect data;*
      - *an output of the device is in communication with data outputs of the m functional units T_{n,j} of the last stage Eₙ by means of a last selector Sₙ configured for establishing a connection with the functional unit T_{n,j} of the last stage Eₙ containing the correct processed data;*
- *a control unit in communication with the selector or selectors Sᵢ, i=1,...,n-1, and the last selector Sₙ; such that they establish a path between the data source providing correct data and the output of the device through a functional unit T_{i,j} randomly selected for each stage Eᵢ, said randomly selected functional unit T_{i,j} being in charge of processing the correct data, and*
*wherein it is verified* that *the sequence of steps Pᵣ with r=1,...,R corresponds to an ordered sequence of steps resulting from concatenating, in consecutive order, the subsets of steps spᵢ for i=1,...,n executed by the process units of the functional units T_{i,j} belonging to said path.*

The device provides means for processing the complete sequence of steps Pᵣ with r=1,...,R by establishing batches of steps, that is, groups or subsets of steps spᵢ wherein by concatenating these subsets of steps spᵢ the complete sequence of steps Pᵣ with r=1,...,R is recovered.

The device uses a minimum unit referred to as functional unit. Each functional unit comprises at least one data input, a process unit which is in charge of executing the subsets of steps spᵢ the process unit has assigned to it, and an output for the data processed by the process unit.

One of the main strategies of the device is its parallel data processing through a plurality of functional units, with at least one of the functional units processing correct data and the rest of the functional units processing incorrect, also referred to as "false" data.

The device thereby outputs signals for correct data processing but also for the incorrect data processing, therefore hindering a possible attacker from distinguishing which signals come from the functional unit working with the correct data since the processing with functional units operating with correct and false data are masked with others.

Breaking down the sequence of steps Pᵣ with r=1,...,R into a plurality of subsets of steps spᵢ allows the data that has already been partially processed with a subset of steps spᵢ of one functional unit to be transferred to another unit so that it may continue with the following subsets of steps spᵢ, and so on until completing the complete sequence of steps Pᵣ with r=1,...,R.

The specific way to establish this parallel processing of the sequence of steps Pᵣ with r=1,...,R by means of the batch processing of subsets of steps spᵢ is by using a distribution of the functional units in stages, wherein for each stage it in turn comprises a plurality of functional units.

Each intermediate stage receives correct data reaching at least one of the randomly selected functional units and incorrect data reaching the rest of the functional units. All the functional units process the data they receive, each functional unit processes the assigned data, processing it according to the batch made up of the subset of steps spᵢ corresponding to said stage.

When going from one stage to the next, the at least one functional unit that will continue to process the correct data is again randomly selected but it is ensured that the data processed by a previous functional unit that processed the correct data is the unit that feeds a new functional unit in charge of processing the correct data. The remaining functional units receive the false data processed by the remaining functional units, wherein the communication between the functional units of one stage and the functional units of the next stage is established with a one-to-one connection. That is, a bijective relationship is established between the plurality of functional units of one stage and the functional units of the next stage.

At the input of the device it is ensured that at least one of the functional units of the first stage receives the correct data and false data is provided to the rest of the functional units.

The output of the device is fed by the result provided by one of the functional units in charge of processing correct data of the last stage.

The selection of the at least one functional unit that is in charge of processing the correct data in each of the stages is carried out by a control unit which further ensures that a path passing through all the functional units in each stage that have been in charge of processing the correct data is defined from the input to the output. This path is unique for each at least one initial functional unit that has received correct data, and it is further ensured that the set of steps resulting from executing in the process unit of each functional unit the batch made up of the subset of steps spᵢ results in an overall data processing which corresponds to executing all the steps Pᵣ with r=1,...,R and in the appropriate sequential order.

According to a preferred example of the invention, the functional units are distributed in stages and each stage comprises a plurality of functional units, which allows being schematically depicted as an array of rows and columns, with each row being one of the stages. This array distribution allows the stage to be identified with a first index and the functional unit within the stage to be identified with a second index. According to one embodiment, each stage contains only one functional unit processing correct data. In any case, in each stage at least one functional unit processes correct data and at least one functional unit processes incorrect data.

In each stage, the control unit randomly determines at least one functional unit as the one in charge of processing the correct data. The path followed by the correct data processed by the functional units randomly selected for processing said correct data starts from the correct data input and reaches the output where the processed data is provided passing in each stage through a functional unit which does not have to be the one identified with one and the same second index.

According to one embodiment, *the m functional units T_{i,j} of at least one of the stages Eᵢ are configured to execute their subset of steps spᵢ asynchronously, that is, not coinciding in time.*

According to this embodiment, the generated signal time shifts the signal provided by each of the functional units when they execute the set of steps on the assigned data in the operating mode, so it can be interpreted that the data process an attacker would deduce is the result of bringing together several processes, giving rise to a longer process which would not in any case correspond with the process executed on the correct data.

According to one embodiment, each of the *stages Eᵢ is considered to have executed its subset of steps spᵢ when all the m functional units T_{i,j} of said stage have finished the assigned subset of steps.*

According to this embodiment, the device ensures when going from one stage to the next that the correct data has been processed and that both the correct data and the false data are available before starting the next stage.

According to one embodiment, *at least two functional units T_{i,j}, T_{i,j}, different, from the same stage Eᵢ are configured for processing the information with a different processing speed.*

The use of different processing speeds according to this embodiment means that the signal being generated when processing correct data when executing a given step is mixed with the processing of different steps, whereby hindering the interpretation of the step being executed on a piece of data, even though this piece of data is correct. This specific configuration mode of the device is compatible with the preceding examples.

According to one embodiment, *the control unit is configured for acting at least on one of the m functional units T_{i,j} of a given stage Eᵢ when it is in charge of processing false data providing new false data not coming from a functional unit T_{i-1,j} of the preceding stage Eᵢ₋₁.*

The input of new false data in functional units processing false data input a higher noise signal that hinders to a greater extent the interpretation of the signals generated by the functional unit in charge of processing the correct data. This same injection of data can be carried out simultaneously in other functional units of the same stage.

According to one embodiment applicable to all the described examples, *the process units of the m functional units T_{i,j} of a given stage Eᵢ are configured for executing a same subset of steps spᵢ of the sequence of steps Pᵣ with r=1,... ,R.*

According to this embodiment, the use of the same subset of steps spᵢ of the sequence of steps Pᵣ with r=1,..., R by the functional units of the same stage allows similar signals to be masked especially when the false data is similar to the correct data. Likewise, when the data differs greatly, the signal resulting from processing the correct data is masked by the processing of data that does not provide any information correlated with the correct data as it is processed with the same steps.

According to one embodiment, *the control unit is configured for acting at least on one of the functional units T_{i,j} in charge of processing false data providing a subset of steps sp'ᵢ different from the subset of steps spᵢ to be executed by the functional unit T_{i,j} in charge of processing the correct data in stage Eᵢ.*

According to this embodiment, the signal generated by the functional unit in charge of processing the correct data is masked with one or more different signals because the steps applied to the false data differ from the steps applied to the correct data, therefore the information associated with the steps applied on the correct data is also masked.

According to one embodiment, *the selector or selectors Sᵢ, i= 1,.*... *,n-1, comprises m selector units Mⱼ, each selector unit Mⱼ having a communication bus with the data outputs of the m functional units T_{i,j} of the stage Eᵢ and an output connected with the data input of one of the m functional units T_{i+1,j}, with the m selector units Mⱼ being in communication with the control unit, wherein said control unit is configured for the m selector units Mⱼ to establish a bijective connection between the functional units T_{i,j} of stage Eᵢ and the functional units T_{i+1,j'} of stage Eᵢ₊₁.*

According to this embodiment, the selector is made up in turn of a plurality of selector units, one for each functional unit, which has a communication bus fed by all the outputs of the functional units of a stage. The configuration of each selector unit depends on the configuration of the rest of the selector units, wherein it is ensured that each functional unit of the stage receives data from a different functional unit, and wherein the functional unit receiving the correct data is determined by the control unit. The control unit randomly determines which functional unit will receive the correct data by acting on the selector units. This functional unit is unique and is placed in communication with the output of the functional unit of the stage that has processed the correct data.

According to one embodiment, *the device comprises a storage unit configured to store the path to be followed in one stage and the next between the data source and the output of the device generated by the control unit.*

This storage unit allows the path followed by the correct data to be traced from the input to the output. An advantage of this storage is that if there is a cyclical data processing, it is possible to use this information to condition the selection of functional units in later cycles. Likewise, according to this embodiment it is possible to define variables conditional on the functional units which allow the behavior of the device to be modified since it is possible to identify which functional units have processed correct data.

An alternative form of storage applicable to any of the described embodiments is a distributed storage where for each functional unit, only the origin of the data reaching it as well as the following functional unit to which it provides the processed data is stored.

According to one embodiment, *the control unit is configured to use a different seed in each stage Eᵢ.*

The use of different seeds in each of the stages impedes the use of the information obtained in the processing of previous stages which give rise to the deduction of the sequence of the random number generator even though the random number generator uses the same random sequence generating formula.

According to one embodiment, *the control unit uses an initial random seed modified in any of the stages of processing and dependent on the input data, the intermediate data in each stage, the final data processed, the clock status, the key, a random number, or any combination thereof, for generating random numbers used by one or more random number generators in charge of determining the selection of the functional unit in charge of processing true data.*

The selection of the functional unit is established by the control unit by first determining a random number identifying the functional unit in charge of processing the true data among all the functional units of the stage. This random number is generated by initially determining a seed from which said random number is generated.

According to another embodiment, the random number generator is a hardware-implemented TRNG device with at least one of the previously indicated inputs, that is, the initial input data, the intermediate data, the final data, the key, the clock status, and a random number, or a plurality of inputs for the input of a combination of any of the mentioned data.

According to another embodiment, each stage Eᵢ has a different generator wherein its seed comes from the main generator and is specifically regenerated. The regeneration of the seed prevents attacks based on deducing cyclic behaviors of the random number generator. According to another embodiment, the seed is determined by applying a function the arguments of which are the data processed by any of the functional units. The regeneration of the seed is carried out before carrying out one or more stages. The use of any of the mentioned inputs allows a seed to be generated with a smaller degree of correlation by introducing entropy into the system.

According to one embodiment of the invention, *the data processing in the device is carried out in a given number of cycles, wherein each cycle comprises the sequence of steps Pᵣ with r=1,...,R with R being a pre-established integer, and wherein in each cycle the control unit is configured to regenerate the random number generating seed or seeds for the selection of functional units T_{i,j} in charge of processing correct data.*

In this embodiment, the device processes data packets by applying the sequence of R steps Pᵣ, therefore even though they change data, a possible attacker may be expecting that the data to be processed does not change from one cycle to another so the changes would only be caused by the steps executed by the process units of the functional units deducing how the information is processed. This situation may be common in industrial processes where there is a capture and processing of data coming from production processes where the conditions generated by the data do not change over long periods of time. The regeneration of the seed for each cycle allows attacks of this type to be prevented.

According to one embodiment of the invention, *the method of regenerating the seed or seeds combines data generated in the preceding cycle and*/*or the input data and*/*or a state of the device.*

The use of processed data in either the current cycle or in the preceding cycle and/or the state of the device introduces entropy into the system, hindering attacks that are searching for behavioral patterns in the random numbers used, and therefore preventing the prediction of which functional unit is the one processing the correct information, which would give rise to a possible filtration of the signals to be used in the side-channel attack.

According to another embodiment, *the functional units T_{i,j} receiving incorrect data are configured to perform a null transformation or a different transformation on the data received with respect to subset of steps spᵢ that is performed on the correct data.*

According to this embodiment, the functional units modify the manner in which they process false data, preventing possible correlations between the signals generated by the functional units in charge of processing the correct data and the units in charge of processing false data such that not only is the correct data protected, but so are the steps that are being used by the process unit of each functional unit.

A specific form of implementation of this embodiment is by means of a control input in communication with the control unit such that by activating this input, the functional unit is informed that it must change its manner of processing the information.

According to another embodiment, *the data source comprises a correct data module and a false data module such* that the *functional units T_{i,j} of the first stage E₁ receive the data of either the first module or else the second module selected by means of an input selector S₀.*

According to this embodiment, the correct data and the false data are generated by different modules feeding the input by using a selector.

According to a preferred embodiment, *the data source is configured to feed a data input management module such that, depending on a random number generator, it provides at least at one of its outputs the correct data while at the rest of its outputs it provides modified data, that is, incorrect data, such that each of the functional units T_{i,j} of the first stage E₁ receives the data of one of the outputs of the data input management module.*

According to this embodiment, a single data source provides the correct data and feeds a data input management module. This management module leaves the correct data in non-manipulated form for feeding at least one functional unit of the first stage with correct data, and manipulates the correct data to generate incorrect data and feeding by means of different outputs to the remaining functional units. The selection of the units receiving the correct data is determined by the data input management module depending on a random number generator that is internal or external with respect to the module.

According to another embodiment, the system has a series of blocks at the end of each functional unit which allows the data to be corrupted or not depending on the random selector. According to another embodiment, these changes are minor, such that the false data is very similar to the correct data and prevents readily distinguishing correct data and false data.

According to a preferred example, *in each stage Eᵢ only one functional unit T_{i,j} is configured to process correct data.*

According to this embodiment, correct data management is minimized so the generated signals which may reveal correct data are minimal and masked with the signals generated by the rest of the functional units processing false data.

### Description of the Drawings

These and other features and advantages of the invention will become more apparent based on the following detailed description of a preferred embodiment, given only by way of nonlimiting illustrative example in reference to the attached figures.
Figure 1 shows a schematic view of an embodiment of the invention.
Figure 2 shows a schematic view of a second embodiment of the invention.
Figure 3 shows a detail of an embodiment of a selector located between two consecutive stages applicable to any of the preceding examples.

### Detailed Description of the Invention

The present invention is a device protected against side-channel attacks intended for data processing by applying a sequence of steps. This device has a data input with which it is fed and carried out the sequence of steps, preventing a possible attacker from being able to interfere with certain data and the manner in which it is processed therein. Once processed, the data is provided through an output.

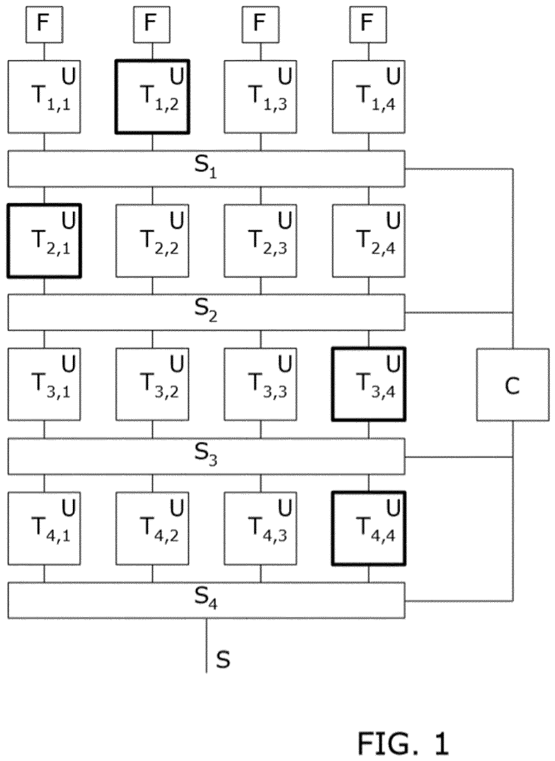

According to Figure 1, the device according to an example of the invention has an input with the data to be processed identified as correct data. The invention manipulates both correct data and false data so that should the possible attacker have access to the signals produced by any of the components of the device, he will receive signals due to the processing of correct data and also signals due to the processing of incorrect data.

For this purpose, the sequence of steps (Pᵣ) with r=1,...,R with R being a pre-established integer, is divided into batches of consecutive steps. That is, it is divided into subsets of steps spᵢ with i=1, ...,n with n being an integer smaller than R such that the data is first processed according to the first subset of data sp₁, then according to a second subset of data sp₂, and so on and so forth until the last subset of data spₙ, wherein sequentially carrying out sp₁, sp₂,..., spₙ is equivalent to carrying out the steps (Pᵣ) with r=1,...,R. Processing data according to the subset of steps spᵢ is identified as carrying out stage Eᵢ*.*

To process the subset of steps spᵢ the device uses which are referred to as functional units. According to the embodiment shown in Figure 1, the device uses a plurality of functional units distributed in rows and columns and these are identified as functional units (T_{i,j}) with i=1,...,n; and j=1,...,m with n and m being pre-established integers. In this case both n and m take the value 4.

Each functional unit (T_{i,j}) is configured at least:
- with a data input operable to receive data,
- a process unit (U) configured for executing the subset of steps spᵢ assigned to said functional unit (T_{i,j}) on the data received in the data input;
- a data output to provide the data processed by the process unit (U) .

By following the schematic depiction of Figure 1, the first stage E₁ is formed by the functional units (T_{1,j}) of the first row, that is n=1; the second stage E₂ is formed by the functional units (T_{2,j}) of the second row, that is n=2; the third stage E₃ is formed by the functional units (T_{3,j}) of the third row, that is n=3; and the fourth stage E₄ is formed by the functional units (T_{4,j}) of the fourth row, that is n=4. Each stage Eᵢ is in charge of processing data by applying the subset of steps spᵢ and comprises four functional units identified by the index j=1..4.

In the first stage, all the functional units (T_{1,j}) receive data, hence Figure 1 shows a module acting like a data source (F). One of the functional units (T_{1,j}), with a given j receives the correct data to be processed and the rest of the functional units (T_{1,j'}) with j'≠j receive false data. The following process is, following a progression in time, for each of the functional units (T_{1,j}), to process the data it has received by carrying out the subset of steps sp₁.

The selection of the functional unit (T_{1,j}) in charge of processing the correct data is random. Once all the functional units (T_{1,j}) of the first stage E₁ have finished, the data processed by each functional unit (T_{1,j}) is transferred to a functional unit (T_{2,j}) of the next stage E₂. The link between the output of a functional unit (T_{1,j}) of the first stage E₁ and the input of a functional unit (T_{2,j}) of the second stage E₂ is carried out by means of a selector Sᵢ (with i=1 in this case) which establishes a bijective relationship. That is, each functional unit (T_{i,j}) of one stage Eᵢ provides through its processed data output the input of a single functional unit (T_{i+1,j'}) of the next stage Eᵢ₊₁ and each functional unit (T_{i+1,j'}) of stage Eᵢ₊₁ receives data from only one functional unit (T_{i+i,j'}).

The functional unit (T_{i+1,j}) of the next stage Eᵢ₊₁ in charge of processing the correct data is also randomly selected by the control unit (C) acting on the selector (Sᵢ).

This same process is reproduced until completing all the stages, where Figure 1 shows with a thicker line those functional units (T_{i,j}) which, in one embodiment, have been in charge of processing correct data in the execution of all the steps and where those which do not have a thicker line have processed incorrect data.

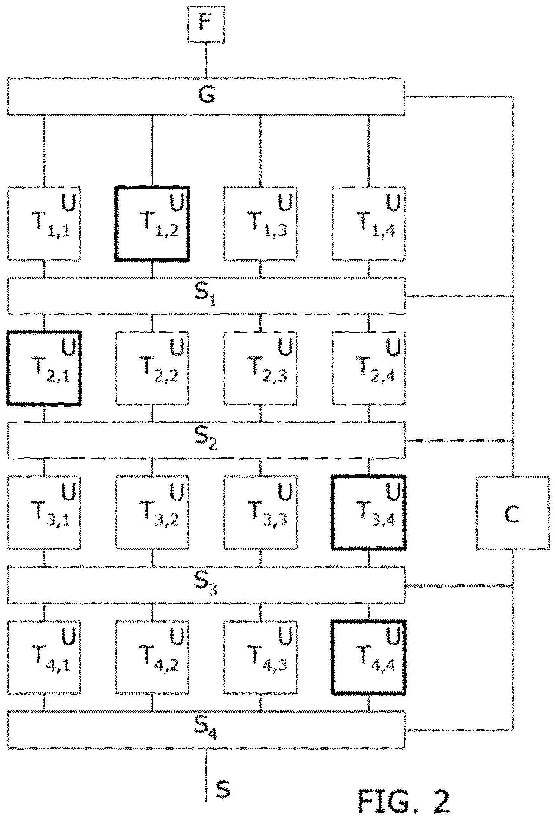

Figure 2 shows a second embodiment where the device uses a single data source (F) providing correct data. The data source feeds a data input management module (G) such that, depending on a random number generator, it provides a randomly established output with the correct data and the rest of the outputs with incorrect data. In this embodiment there is one output for each functional unit (T_{1,j}) of the first stage E₁ such that only one functional unit (T_{1,j}) receives the correct data.

Following this embodiment, the random number generator that determines which functional unit (T_{1,j}) of the first stage E₁ will receive the correct data is included in the control unit (C).

In this same embodiment, the data input management module (G) is in charge of manipulating the correct data so that it will become incorrect data and is fed to all those outputs that do not correspond with the one randomly selected by the control unit (C) as the correct data output.

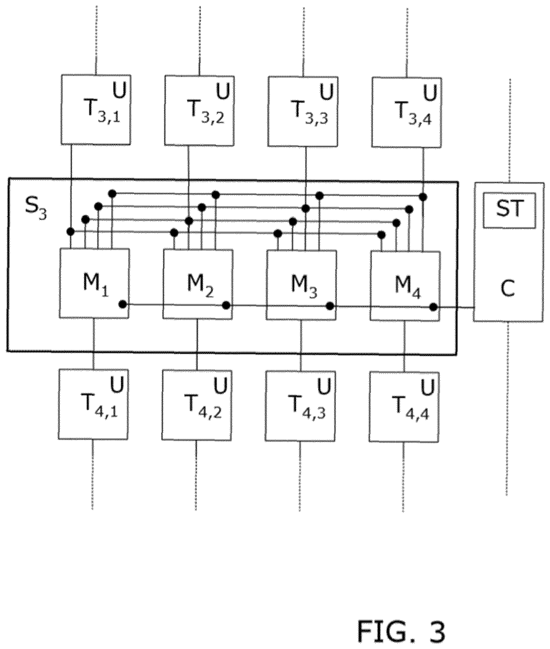

Figure 3 shows an embodiment of the selectors (Sᵢ) located between consecutive stages (Eᵢ, Eᵢ₊₁) applicable to both the first embodiment shown in Figure 1 and to the second embodiment shown in Figure 2. In this specific case, the third selector (S₃) located between the third stage E₃ and the fourth stage E₄ is depicted.

The selector (S₃) according to this embodiment is formed by four selector units (Mⱼ), j=1..4, wherein each selector unit is a unit with as many inputs as functional units (T_{3,j}) providing processed data, in this case four, and a single output which is what is fed to a functional unit (T_{4,j}) of the next stage E₄ which it feeds at its input.

Each selector unit (Mⱼ) thereby has access to all the data processed in an stage but selects the data determined by the control unit (C). The control unit (C) is what ensures that no selector unit takes data from the same functional unit.

For all the selector units (Mⱼ) in communication with the outputs of the functional units (T_{i,j}), the inputs of the selector units (Mⱼ) are communicated by a common data bus depicted by the transverse lines, where thick circles indicate that the lines are in communication.

This same Figure 3 shows the control unit (C) with a storage unit (ST) capable of storing the path established by the functional units that have processed the correct data. In this case, the path is determined by the integers 2, 1, 4, 4 corresponding to index j for the stages going from 1 to 4.

According to another embodiment, the path is not stored in a single unit but rather is stored in a distributed manner. In particular in each stage, each functional unit (T_{i,j}) stores the source functional unit (T_{i-1,j'}) that provided it with the data to be processed. According to another embodiment, each functional unit (T_{i,j}) also stores the functional unit (T_{i+1,j'}) of the next stage to which it feeds the processed data.

The final selector (S₄) is in charge of selecting as output only the data provided by the functional unit (T_{4,4}) that has processed the correct data.

According to a preferred example of the invention, the device is configured by means of an FPGA on which the described architecture has been implemented.

According to one embodiment, the data sources (F) are distinguished as correct data sources F1 or false data sources F2, wherein also according to an example, the false data sources use the correct data by modifying them so that they are corrupt data.

Although for the sake of clarity Figure 1 does not show a direct connection between the control unit (C) and each of the functional units (T_{i,j}), according to one embodiment this communication exists and may have different functions.

A first function is to modify the processing speed, for example by slowing down functional units and maintaining the speed for the rest of the functional units of the same stage.

A second function is to provide a wait time such that not all the functional units (T_{i,j}) of one and the same stage Eᵢ process information at the same time.

A third function is to activate a change in behavior in the functional unit (T_{i,j}) such that it processes steps other than steps spᵢ assigned to stage Eᵢ*.*

Figure 3 does not graphically depict the presence of a random number generator either. According to one embodiment, the control unit (C) has a random number generator such that the random number is used for determining which functional unit in a given stage is the one that will process the correct data.

According to one embodiment, the random number generator is based on the implementation of hardware with a recurrent formula such that, given a seed value x₀, each random number is generated according to a generating function based on the preceding random number generated: xₙ₊₁=f(xₙ) . Examples of generating functions are, for example, those expressed as xₙ₊₁=(axₙ+c) (*mod* m), wherein a is a multiplicative constant, c is an additive constant, and m is an integer identifying the operator *mod* as the modulus for calculating the rest. The integers xo, a, c, and m must be non-negative and c<m.

According to one embodiment, the random number generator regenerates the seed after a given number of steps. According to one example, the seed is regenerated in each stage. According to another example compatible with all the preceding examples, the seed is regenerated each time all the stages have been executed.

According to one embodiment compatible with any of the described examples, the generation of the new seed is carried out by combining data being processed, which has already been processed, or state variable data of any of the parts of the device. Any of these options establishes inputs in the random number generator the values of which are hard to predict since they depend on the processing operations as well as the data thereof.

## Claims

1. Device protected against side-channel attacks, the device being adapted for data processing by means of a sequence of steps (Pᵣ) with r=1..R with R being a pre-established integer, wherein the device comprises:
- a plurality of functional units (T_{i,j}) with i=1,...,n; and j=1,...,m with n and m being pre-established integers, verifying that:
o each of the functional units (T_{i,j}) comprises at least
- a data input operable to receive data,
- a process unit (U) configured for executing a subset of steps spᵢ on the data received in the data input;
- a data output to provide the data processed by the process unit (U);
o the functional units (T_{i,j}) are sequentially distributed in stages (Eᵢ), i=1,...,n, wherein
- each stage (Eᵢ) comprises m of the plurality of functional units (T_{i,j}), j=1,...,m;
- the m functional units (T_{i+1,j}) of one of the stages from the second stage to the last stage, Eᵢ₊₁*,* have data inputs in communication with data outputs of the m functional units (T_{i,j}) of its preceding stage, Eᵢ*,* by means of a selector Sᵢ*,* i=1,..., n-1, which establishes a bijective connection between the m functional units (T_{i,j}) of the stage Eᵢ and the m functional units (T_{i+1,k=j'}) of the stage Eᵢ₊₁, with j' equal to or different from j;
- the data inputs of the m functional units (T_{1,j}) of the first stage (E₁) are in communication with a data source (F) such that:
- at least one of the m functional units (T_{1,j}) of the first stage (E₁) receives correct data, and
- the remaining functional units of the first stage (E₁), other than the at least one functional unit (T_{1,j}) that receives correct data; receive false data, that is, incorrect data;
- an output (S) of the device is in communication with data outputs of the m functional units (T_{n,j}) of the last stage Eₙ by means of a last selector Sₙ configured for establishing a connection with the functional unit (T_{n,j}) of the last stage Eₙ containing the correct processed data;
- a control unit (C) in communication with the selector or selectors Sᵢ*,* i=1,...,n-1, and the last selector Sₙ; such that they establish a path between the data source (F) providing correct data and the output of the device (S) through a functional unit (T_{i,j}) randomly selected for each stage Eᵢ*,* said randomly selected functional unit (T_{i,j}) being in charge of processing the correct data, and
wherein it is verified that the sequence of steps (Pᵣ) with r=1,...,R corresponds to an ordered sequence of steps resulting from concatenating, in consecutive order, the subsets of steps spᵢ for i=1,...,n executed by the process units of the functional units (T_{i,j}) belonging to said path.

2. Device according to claim 1, wherein the m functional units (T_{i,j}) of at least one of the stages (Eᵢ) are configured to execute their subset of steps spᵢ asynchronously, that is, not coinciding in time.

3. Device according to claim 1 or 2, wherein each of the stages (Eᵢ) is considered to have executed its subset of steps spᵢ when all the m functional units (T_{i,j}) of said stage have finished its assigned subset of steps.

4. Device according to any of the preceding claims, wherein at least two functional units (T_{i,j}, T_{i,j'}) other than the same stage (Eᵢ) are configured for processing the information with a different processing speed.

5. Device according to any of the preceding claims, wherein the control unit (C) is configured for acting at least on one of the m functional units (T_{i,j}) of a given stage (Eᵢ) when it is in charge of processing false data providing new false data not coming from a functional unit (T_{i-1,j}) of the preceding stage (Eᵢ₋₁) .

6. Device according to any of the preceding claims, wherein the process units (U) of the m functional units (T_{i,j}) of a given stage (Eᵢ) are configured for executing a same subset of steps spᵢ of the sequence of steps Pᵣ with r=1..R.

7. Device according to any of the preceding claims, wherein the control unit (C) is configured for acting at least on one of the functional units (T_{i,j}) in charge of processing false data providing a subset of steps sp'ᵢ different from the subset of steps spᵢ to be executed by the functional unit (T_{i,j}) in charge of processing the correct data in stage (Eᵢ).

8. Device according to any of the preceding claims, wherein the selector or selectors Sᵢ*,* i= 1...n-1, comprises m selector units (Mⱼ), each selector unit (Mⱼ) having a communication bus with the data outputs of the m functional units (T_{i,j}) of the stage Eᵢ and an output connected with the data input of one of the m functional units (T_{i+1,j}) of the following stage Eᵢ₊₁*,* with the m selector units (Mⱼ) being in communication with the control unit (C), wherein said control unit (C) is configured for the m selector units (Mⱼ) to establish a bijective connection between the m functional units (T_{i,j}) of stage Eᵢ and the m functional units (T_{i+1,j'}) of stage Eᵢ₊₁.

9. Device according to any of the preceding claims, wherein the device comprises a storage unit (ST) configured to store the path established between the data source (F) and the output of the device (S) generated by the control unit (C).

10. Device according to any of the preceding claims, wherein the control unit (C) is configured to use an initial random seed for generating random numbers used for selecting the functional unit (T_{i,j}) in charge of processing correct data among the m functional units of one of the stages (Eᵢ).

11. Device according to any of the preceding claims, wherein the control unit (C) is configured to use a different seed in each stage Eᵢ*.*

12. Device according to any of the preceding claims, wherein the data processing in the device is carried out in a given number of cycles, wherein each cycle comprises the sequence of steps (Pᵣ) with r=1..R, with R being a pre-established integer, and wherein in each cycle the control unit (C) is configured to regenerate the random number generating seed or seeds for the selection of functional units (T_{i,j}) in charge of processing correct data.

13. Device according to the preceding claim, wherein the method of regenerating the seed or seeds combines data generated in the preceding cycle and/or the input data and/or a state of the device.

14. Device according to any of the preceding claims, wherein the functional units (T_{i,j}) receiving incorrect data are configured to perform a null transformation or a different transformation on the data received with respect to the subset of steps spᵢ which is performed on the correct data.

15. Device according to any of the preceding claims, wherein the data source (F) comprises a correct data module (F1) and a false data module (F2) such that the functional units (T_{1,j}) of the first stage (E₁) receive the data of either the first module (F1) or else the second module (F2) selected by means of an input selector S₀.

16. Device according to any of the preceding claims, wherein the false data module (F2) is configured to receive the correct data from the correct data module (F1) and to corrupt it by performing one or more modifications on same to generate false data.

17. Device according to any of claims 1 to 14, wherein the data source (F) is configured to feed a data input management module (G) such that, depending on a random number generator, it provides at least at one of its outputs the correct data while at the rest of its outputs it provides modified data, that is, incorrect data, such that each of the functional units T_{i,j} of the first stage E₁ receives the data of one of the outputs of the data input management module (G).

18. Device according to any of the preceding claims, wherein only one functional unit (T_{i,j}) is configured to process correct data at each stage (Eᵢ).

## Patentansprüche

1. Vorrichtung, welche gegen Seitenkanalangriffe geschützt ist, wobei die Vorrichtung mittels einer Sequenz von Schritten (Pᵣ) zur Datenverarbeitung adaptiert ist, mit r=1..R und wobei R eine vorgegebene ganze Zahl ist, wobei die Vorrichtung umfasst:
- eine Mehrzahl funktionaler Einheiten (T_{i,j}), mit i=1,...,n; und j=1,...,m, wobei n und m vorgegebene ganze Zahlen sind, welche verifizieren, dass:
∘ jede der funktionalen Einheiten (T_{i,j}) wenigstens umfasst:
- eine Dateneingabe, welche zum Empfangen von Daten betreibbar ist,
- eine Prozesseinheit (U), welche dazu eingerichtet ist, einen Untersatz von Schritten spᵢ auf die bei der Dateneingabe empfangenen Daten auszuführen;
- eine Datenausgabe, um die durch die Prozesseinheit (U) verarbeiteten Daten bereitzustellen;
∘ die funktionalen Einheiten (T_{i,j}) sequentiell in Phasen (Eᵢ) verteilt sind, mit i=1,...,n, wobei
- jede Phase (Eᵢ) m der Mehrzahl funktionaler Einheiten (T_{i,j}) umfasst, mit j=1,...,m;
- die m funktionalen Einheiten (T_{i+1,j}) einer der Phasen von der zweiten Phase bis zu der letzten Phase, Eᵢ₊₁, mittels eines Selektors Sᵢ*,* mit i=1,...,n-1, welcher eine bijektive Verbindung zwischen den m funktionalen Einheiten (T_{i,j}) der Phase Eᵢ und den m funktionalen Einheiten (T_{i+1,j'}) der Phase Eᵢ₊₁ erstellt, mit j' gleich oder unterschiedlich zu j, Dateneingaben in Kommunikation mit Datenausgaben der m funktionalen Einheiten (T_{i,j}) ihrer vorhergehenden Phase, Eᵢ*,* aufweisen;
- die Dateneingaben der m funktionalen Einheiten (T_{1,j}) der ersten Phase (E₁) in Kommunikation mit einer Datenquelle (F) sind, sodass:
- wenigstens eine der m funktionalen Einheiten (T_{1,j}) der ersten Phase (E₁) korrekte Daten empfängt, und
- die verbleibenden funktionalen Einheiten der ersten Phase (E₁), abgesehen von der wenigstens einen funktionalen Einheit (T_{1,j}), welche korrekte Daten empfängt, falsche Daten empfangen, d.h. inkorrekte Daten;
- eine Ausgabe (S) der Vorrichtung mittels wenigstens eines Selektors Sₙ, welcher dazu eingerichtet ist, eine Verbindung mit der funktionalen Einheit (T_{n,j}) der letzten Phase Eₙ zu erstellen, welche die korrekten verarbeiteten Daten enthält, in Kommunikation mit Datenausgaben der m funktionalen Einheiten (T_{n,j}) der letzten Phase Eₙ ist;
- eine Steuerungseinheit (C), welche in Kommunikation mit dem Selektor oder den Selektoren Sᵢ*,* mit i=1,...,n-1, und dem letzten Selektor Sₙ ist; sodass sie einen Pfad zwischen der Datenquelle (F), welche korrekte Daten bereitstellt, und der Ausgabe der Vorrichtung (S) durch eine funktionale Einheit (T_{i,j}) erstellen, welche für jede Phase Eᵢ zufällig ausgewählt ist, wobei die zufällig ausgewählte funktionale Einheit (Ti,j) für das Verarbeiten der korrekten Daten zuständig ist, und
wobei es verifiziert ist, dass die Sequenz von Schritten (Pᵣ), mit r=1,...,R, einer geordneten Sequenz von Schritten entspricht, welche aus einer Verkettung in fortlaufender Reihenfolge resultiert, wobei die Untersätze von Schritten spᵢ für i=1,...,n durch die Prozesseinheiten der funktionalen Einheiten (T_{i,j}) ausgeführt werden, welche zu dem Pfad gehören.

2. Vorrichtung nach Anspruch 1, wobei die m funktionalen Einheiten (T_{i,j}) wenigstens einer der Phasen (Eᵢ) dazu eingerichtet sind, ihren Untersatz von Schritten spᵢ asynchron, d.h. nicht zeitgleich, auszuführen.

3. Vorrichtung nach Anspruch 1 oder 2, wobei für jede der Phasen (Eᵢ) angenommen wird, dass sie ihren Untersatz von Schritten spᵢ ausgeführt hat, wenn alle der m funktionalen Einheiten (T_{i,j}) der Phase ihren zugeteilten Untersatz von Schritten beendet haben.

4. Vorrichtung nach einem der vorhergehenden Ansprüche, wobei wenigstens zwei funktionale Einheiten (T_{i,j}, T_{i,j'}), abgesehen von der gleichen Phase (Eᵢ), zum Verarbeiten der Informationen mit einer unterschiedlichen Verarbeitungsgeschwindigkeit eingerichtet sind.

5. Vorrichtung nach einem der vorhergehenden Ansprüche, wobei die Steuerungseinheit (C) dazu eingerichtet ist, auf wenigstens eine der m funktionalen Einheiten (T_{i,j}) einer gegebenen Phase (Eᵢ) einzuwirken, wenn sie für die Verarbeitung falscher Daten verantwortlich ist, wobei neue falsche Daten erzeugt werden, welche nicht von einer funktionalen Einheit (T_{i-1,j}) der vorhergehenden Phase (Eᵢ₋₁) stammen.

6. Vorrichtung nach einem der vorhergehenden Ansprüche, wobei die Prozesseinheiten (U) der m funktionalen Einheiten (T_{i,j}) einer gegebenen Phase (Eᵢ) zum Ausführen des gleichen Untersatzes von Schritten spᵢ der Sequenz von Schritten Pᵣ, mit r=1...R eingerichtet sind.

7. Vorrichtung nach einem der vorhergehenden Ansprüche, wobei die Steuerungseinheit (C) zum Einwirken auf wenigstens eine der funktionalen Einheiten (T_{i,j}) eingerichtet ist, welche für die Verarbeitung falscher Daten verantwortlich ist, wobei ein Untersatz von Schritten sp'ᵢ bereitgestellt ist, welcher unterschiedlich zu dem Untersatz von Schritten spᵢ ist, welche durch die funktionale Einheit (T_{i,j}) auszuführen sind, welche für die Verarbeitung der korrekten Daten in Phase (Eᵢ) verantwortlich ist.

8. Vorrichtung nach einem der vorhergehenden Ansprüche, wobei der Selektor oder die Selektoren Sᵢ*,* mit i=1...n-1, m Selektoreinheiten (Mⱼ) umfasst/umfassen, wobei jede Selektoreinheit (Mⱼ) einen Kommunikationsbus mit den Datenausgaben der m funktionalen Einheiten (T_{i,j}) der Phase Eᵢ und eine Ausgabe aufweist, welche mit der Dateneingabe einer der m funktionalen Einheiten (T_{i+1,j}) der nachfolgenden Phase Eᵢ₊₁ verbunden ist, wobei die Selektoreinheiten (Mⱼ) in Kommunikation mit der Steuerungseinheit (C) sind, wobei die Steuerungseinheit (C) dazu eingerichtet ist, dass die m Selektoreinheiten (Mⱼ) eine bijektive Verbindung zwischen den m funktionalen Einheiten (T_{i,j}) der Phase Eᵢ und den m funktionalen Einheiten (T_{i+1,j'}) der Phase Eᵢ₊₁ erstellen.

9. Vorrichtung nach einem der vorhergehenden Ansprüche, wobei die Vorrichtung eine Speichereinheit (ST) umfasst, welche dazu eingerichtet ist, den zwischen der Datenquelle (F) und der Ausgabe der Vorrichtung (S), welche von der Steuerungseinheit (C) erzeugt wird, erstellten Pfad zu speichern.

10. Vorrichtung nach einem der vorhergehenden Ansprüche, wobei die Steuerungseinheit (C) dazu eingerichtet ist, einen initialen zufälligen Seed zum Erzeugen zufälliger Nummern zu verwenden, welche zur Auswahl der funktionalen Einheit (T_{i,j}) verwendet werden, welche für die Verarbeitung korrekter Daten unter den m funktionalen Einheiten einer der Phasen (Eᵢ) verantwortlich ist.

11. Vorrichtung nach einem der vorhergehenden Ansprüche, wobei die Steuerungseinheit (C) dazu eingerichtet ist, einen unterschiedlich Seed bei jeder Phase Eᵢ zu verwenden.

12. Vorrichtung nach einem der vorhergehenden Ansprüche, wobei die Datenverarbeitung in der Vorrichtung in einer vorgegebenen Anzahl von Zyklen ausgeführt wird, wobei jeder Zyklus die Sequenz von Schritten (Pᵣ) umfasst, mit r=1..R, wobei R eine vorgegebene ganze Zahl ist, und wobei die Steuerungseinheit (C) in jedem Zyklus dazu eingerichtet ist, die zufällige Anzahl zu erneuern, welche einen Seed oder Seeds für die Auswahl funktionaler Einheiten (T_{i,j}) erzeugt, welche für die Verarbeitung korrekter Daten verantwortlich sind.

13. Vorrichtung nach dem vorhergehenden Anspruch, wobei das Verfahren zum Erneuern des Seeds oder der Seeds in dem vorhergehenden Zyklus erzeugte Daten und/oder die Eingabedaten und/oder einen Zustand der Vorrichtung kombiniert.

14. Vorrichtung nach einem der vorhergehenden Ansprüche, wobei die funktionalen Einheit (T_{i,j}), welche inkorrekte Daten empfangen, dazu eingerichtet sind, eine Null-Transformation oder eine unterschiedliche Transformation auf den Daten durchzuführen, welche in Bezug auf den Untersatz von Schritten spᵢ empfangen worden sind, welcher in den korrekten Daten durchgeführt wird.

15. Vorrichtung nach einem der vorhergehenden Ansprüche, wobei die Datenquelle (F) ein Modul (F1) korrekter Daten und ein Modul (F2) falscher Daten umfasst, sodass die funktionalen Einheiten (T_{1,j}) der ersten Phase (E₁) die Daten entweder des ersten Moduls (F1) oder ansonsten des zweiten Moduls (F2) empfangen, ausgewählt mittels eines Eingabeselektors S₀.

16. Vorrichtung nach einem der vorhergehenden Ansprüche, wobei das Modul (F2) falscher Daten dazu eingerichtet ist, die korrekten Daten von dem Modul (F1) korrekter Daten zu empfangen und sie durch Durchführen einer oder mehrerer Modifikationen auf denselben zu korrumpieren, um falsche Daten zu erzeugen.

17. Vorrichtung nach einem der Ansprüche 1 bis 14, wobei die Datenquelle (F) dazu eingerichtet ist, ein Dateneingabe-Verwaltungsmodul (G) zu speisen, sodass es, abhängig von einem Zufallszahlengenerator, wenigstens an einer seiner Ausgaben die korrekten Daten ausgibt, während sie an den verbleibenden ihrer Ausgaben modifizierte Daten ausgibt, d.h. inkorrekte Daten, sodass jede der funktionalen Einheiten T_{1,j} der ersten Phase E₁ die Daten einer der Ausgaben des Dateneingabe-Verwaltungsmoduls (G) empfängt.

18. Vorrichtung nach einem der vorhergehenden Ansprüche, wobei nur eine funktionale Einheit (T_{i,j}) dazu eingerichtet ist, korrekte Daten in jeder Phase (Eᵢ) zu verarbeiten.

## Revendications

1. Dispositif protégé contre des attaques par canaux auxiliaires, le dispositif étant adapté pour le traitement de données au moyen d'une séquence d'étapes (Pᵣ) avec r = 1..R, R étant un entier préétabli, le dispositif comprenant :
- une pluralité d'unités fonctionnelles (T_{i,j}) avec i = 1,...,n ; et j = 1,...,m, n et m étant des entiers préétablis, en vérifiant que :
∘ chacune des unités fonctionnelles (T_{i,j}) comprend au moins
- une entrée de données utilisable pour recevoir des données,
- une unité de traitement (U) configurée pour exécuter un sous-ensemble d'étapes spᵢ sur les données reçues dans l'entrée de données ;
- une sortie de données pour fournir les données traitées par l'unité de traitement (U) ;
∘ les unités fonctionnelles (T_{i,j}) sont réparties séquentiellement en étages (Eᵢ), i = 1,...,n,
- chaque étage (Eᵢ) comprenant m de la pluralité d'unités fonctionnelles (T_{i,j}), j = 1,...,m ;
- les m unités fonctionnelles (T_{i+1,j}) de l'un des étages depuis le deuxième jusqu'au dernier étage, Eᵢ₊₁, ont des entrées de données en communication avec des sorties de données des m unités fonctionnelles (T_{i,j}) de son étage précédent, Eᵢ*,* au moyen d'un sélecteur Sᵢ*,* i = 1,...,n-1, qui établit une liaison bijective entre les m unités fonctionnelles (T_{i,j}) de l'étage Eᵢ et les m unités fonctionnelles (T_{i+1,j'}) de l'étage Eᵢ₊₁, avec j' égal ou différent de j ;
- les entrées de données des m unités fonctionnelles (T_{i,j}) du premier étage (E₁) sont en communication avec une source de données (F) telle que :
- au moins une des m unités fonctionnelles (T_{1,j}) du premier étage (E₁) reçoit des données correctes, et
- les unités fonctionnelles restantes du premier étage (E₁), autres que ladite au moins une unité fonctionnelle (T_{1,j}) qui reçoit des données correctes ; recevoir de fausses données, c'est-à-dire des données incorrectes ;
- une sortie (S) du dispositif est en communication avec des sorties de données des m unités fonctionnelles (T_{n,j}) du dernier étage Eₙ au moyen d'un dernier sélecteur Sₙ configuré pour établir une connexion avec l'unité fonctionnelle (T_{n,j}) du dernier étage Eₙ contenant les données traitées correctes ;
- une unité de commande (C) en communication avec le ou les sélecteurs Sᵢ*,* i = 1,...,n-1, et le dernier sélecteur Sₙ ; de sorte qu'ils établissent un chemin entre la source de données (F) fournissant des données correctes et la sortie du dispositif (S) à travers une unité fonctionnelle (T_{i,j}) choisie aléatoirement pour chaque étage Eᵢ*,* ladite unité fonctionnelle (T_{i,j}) choisie aléatoirement étant chargée de traiter les données correctes, et
dans lequel on vérifie que la séquence d'étapes (Pᵣ) avec r = 1,...,R correspond à une séquence ordonnée d'étapes résultant de la concaténation, dans un ordre consécutif, des sous-ensembles d'étapes spᵢ pour i = 1,...,n exécutées par les unités de processus des unités fonctionnelles (T_{i,j}) appartenant audit chemin.

2. Dispositif selon la revendication 1, dans lequel les m unités fonctionnelles (T_{i,j}) d'au moins un des étages (Eᵢ) sont configurées pour exécuter leur sous-ensemble d'étapes spᵢ de manière asynchrone, c'est-à-dire non coïncidante dans le temps.

3. Dispositif selon la revendication 1 ou la revendication 2, dans lequel chacun des étages (Eᵢ) est considéré comme ayant exécuté son sous-ensemble d'étapes spᵢ lorsque toutes les m unités fonctionnelles (T_{i,j}) dudit étage ont terminé son sous-ensemble d'étapes attribué.

4. Dispositif selon l'une quelconque des revendications précédentes, dans lequel au moins deux unités fonctionnelles (T_{i,j}, T_{i,j'}) autres qu'un même étage (Eᵢ) sont configurées pour traiter les informations avec une vitesse de traitement différente.

5. Dispositif selon l'une quelconque des revendications précédentes, dans lequel l'unité de commande (C) est configurée pour agir sur au moins l'une des m unités fonctionnelles (T_{i,j}) d'un étage (Eᵢ) donné lorsqu'elle est en charge du traitement de fausses données fournissant de nouvelles fausses données ne provenant pas d'une unité fonctionnelle (T_{i-1,j}) de l'étage précédent (Eᵢ₋₁) .

6. Dispositif selon l'une quelconque des revendications précédentes, dans lequel les unités de traitement (U) des m unités fonctionnelles (T_{i,j}) d'un étage (Eᵢ) donné sont configurées pour exécuter un même sous-ensemble d'étapes spᵢ de la séquence d'étapes Pᵣ avec r = 1..R.

7. Dispositif selon l'une quelconque des revendications précédentes, dans lequel l'unité de commande (C) est configurée pour agir sur au moins l'une des unités fonctionnelles (T_{i,j}) en charge du traitement des fausses données fournissant un sous-ensemble d'étapes sp'ᵢ différent du sous-ensemble d'étapes spᵢ à exécuter par l'unité fonctionnelle (T_{i,j}) en charge du traitement des données correctes à l'étage (Eᵢ) .

8. Dispositif selon l'une quelconque des revendications précédentes, dans lequel le ou les sélecteurs Sᵢ*,* i = 1...n-1, comprennent m unités de sélection (Mⱼ), chaque unité de sélection (Mⱼ) ayant un bus de communication avec les sorties de données des m unités fonctionnelles (T_{i,j}) de l'étage Eᵢ et une sortie reliée à l'entrée de données de l'une des m unités fonctionnelles (T_{i+1,j}) de l'étage suivant Eᵢ₊₁, les m unités de sélection (Mⱼ) étant en communication avec l'unité de commande (C), ladite unité de commande (C) étant configurée pour que les m unités de sélection (Mⱼ) établissent une connexion bijective entre les m unités fonctionnelles (T_{i,j}) de l'étage Eᵢ*,* et les m unités fonctionnelles (T_{i+1,j'}) de l'étage Eᵢ₊₁.

9. Dispositif selon l'une quelconque des revendications précédentes, dans lequel le dispositif comprend une unité de stockage (ST) configurée pour stocker le chemin établi entre la source de données (F) et la sortie du dispositif (S) générée par l'unité de commande (C).

10. Dispositif selon l'une quelconque des revendications précédentes, dans lequel l'unité de commande (C) est configurée pour utiliser une graine aléatoire initiale pour générer des nombres aléatoires utilisés pour sélectionner l'unité fonctionnelle (T_{i,j}) en charge de traiter des données correctes parmi les m unités fonctionnelles d'un des étages (Eᵢ).

11. Dispositif selon l'une quelconque des revendications précédentes, dans lequel l'unité de commande (C) est configurée pour utiliser une graine différente à chaque étape Eᵢ*.*

12. Dispositif selon l'une quelconque des revendications précédentes, dans lequel le traitement des données dans le dispositif est effectué en un nombre donné de cycles, chaque cycle comprenant la séquence d'étapes (Pᵣ) avec r = 1..R, R étant un entier préétabli, et, à chaque cycle, l'unité de commande (C) étant configurée pour régénérer la ou les graines génératrices de nombres aléatoires pour la sélection des unités fonctionnelles (T_{i,j}) chargées de traiter des données correctes.

13. Dispositif selon la revendication précédente, dans lequel le procédé de régénération de la ou des graines combine des données générées au cycle précédent et/ou des données d'entrée et/ou un état du dispositif.

14. Dispositif selon l'une quelconque des revendications précédentes, dans lequel les unités fonctionnelles (T_{i,j}) recevant des données incorrectes sont configurées pour effectuer une transformation nulle ou une transformation différente sur les données reçues par rapport au sous-ensemble d'étapes spᵢ qui est effectué sur les données correctes.

15. Dispositif selon l'une quelconque des revendications précédentes, dans lequel la source de données (F) comprend un module de données correctes (F1) et un module de données fausses (F2) de sorte que les unités fonctionnelles (T_{1,j}) du premier étage (E₁) reçoivent les données soit du premier module (F1), soit du deuxième module (F2) sélectionné au moyen d'un sélecteur d'entrée S₀.

16. Dispositif selon l'une quelconque des revendications précédentes, dans lequel le module de fausses données (F2) est configuré pour recevoir les données correctes du module correct de données (F1) et pour les corrompre en effectuant une ou plusieurs modifications sur celui-ci pour générer de fausses données.

17. Dispositif selon l'une quelconque des revendications 1 à 14, dans lequel la source de données (F) est configurée pour alimenter un module de gestion d'entrée de données (G) tel que, en fonction d'un générateur de nombres aléatoires, elle fournit sur au moins une de ses sorties les données correctes tandis qu'au reste de ses sorties elle fournit des données modifiées, c'est-à-dire des données erronées, de sorte que chacune des unités fonctionnelles T_{1,j} du premier étage E₁ reçoit les données d'une des sorties du module de gestion d'entrée de données (G).

18. Dispositif selon l'une quelconque des revendications précédentes, dans lequel une seule unité fonctionnelle (T_{i,j}) est configurée pour traiter des données correctes à chaque étape (Eᵢ) .
